# EUROPÄISCHE PATENTANMELDUNG

(11) **EP 1 186 974 A2**
(43) Veröffentlichungstag der Anmeldung: **13.03.2002**
(21) Anmeldenummer: 01120024.3
(22) Anmeldetag: 20.08.2001
(51) Int. Cl.: G05B 19/05

(54) **Verfahren zur Optimierung des Ablaufs elektronisch gesteuerter Schaltvorgänge**

(30) Priorität: 07.09.2000 DE 10044178
(71) Anmelder: SIEMENS AKTIENGESELLSCHAFT, 80333 München (DE)
(72) Erfinder: Graf, Rüdiger, 90616 Neuhof (DE); Rupprecht, Georg, 90409 Nürnberg (DE)

(57) **Zusammenfassung**

Die Erfindung betrifft ein Verfahren zur Optimierung des Ablaufs elektronisch gesteuerter Schaltvorgänge, bei dem sequentielle und/oder parallele Schritte (S1 bis S54) durch vorgegebene Transitionsbedingungen (T1 bis T53) aktiviert werden. Während des Ablaufs der elektronisch gesteuerten Schaltvorgänge wird die Aktivierungsdauer jedes Schrittes (S1 bis S54) ermittelt und in Abhängigkeit von der Aktivierungsdauer wird das jeweilige Optimierungspotential bestimmt.

## Beschreibung

Die Erfindung betrifft ein Verfahren zur Optimierung des Ablaufs elektronisch gesteuerter Schaltvorgänge, insbesondere in der industriellen Prozessleittechnik bzw. Automatisierungstechnik, bei der der Ablauf der Schaltvorgänge durch eine elektronische Datenverarbeitungsanlage bzw. ein Automatisierungssystem unterstützt wird.

Die Organisation dieser Ablaufsteuerungen wird in der Regel über entsprechende Programmierungen in der Datenverarbeitungsanlage eines Automatisierungssystems vorgegeben, wobei die hier vereinfachend Schaltvorgänge genannten Aktionen mittels verschiedener Aktoren, beispielsweise auch unter Auswertung von Weiterschaltbedingungen wie z. B. Sensordaten, durchgeführt werden. Der zu steuernde Prozess wird dabei durch entsprechende Funktions- und Datenmodelle (z. B. S7-Graph) graphisch und darüber auch programmiertechnisch in der Datenverarbeitungsanlage bzw. im Computer abgebildet.

Zur Optimierung dieser Ablaufsteuerung ist es von Bedeutung, dass versucht wird, insbesondere eine zeitliche Durchsatzoptimierung der zu steuernden Anlage zu erreichen. Die bisherigen Lösungen bestehen dabei in der Regel aus einem individuellen Ausprobieren und Modifizieren von in dieser Hinsicht verdächtigen Anlagenteilen mit dem Ziel, sich an eine möglichst geschwindigkeitsoptimierte Lösung heranzutasten. In an sich bekannter Weise wird hierzu oft ein außerhalb der eigentlichen Steuerung angebrachter so genannter Trace Speicher benutzt, um den Verlauf von Prozesswerten in der Ablaufsteuerung aufzuzeichnen, aus welchen sich zu langsame bzw. verzögernde Weiterschaltbedingungen ableiten lassen. Die Interpretation dieser Aufzeichnungen kann jedoch äußerst umständlich und zeitaufwendig sein, wobei dieses Verfahren außerdem grundsätzlich bei solchen Weiterschaltbedingungen nicht anwendbar ist, die Teilbedingungen enthalten, welche nicht von außen zugänglich sind, wie z. B. steuerungsinterne Signale, interne Zeitabläufe, Meldungen, etc.

Der Erfindung liegt daher die Aufgabe zugrunde, ein Verfahren zur Optimierung des Ablaufs elektronisch gesteuerter Schaltvorgänge zu schaffen, bei dem auf einfache Weise eine Durchsatzoptimierung der Steuerung durchführbar ist.

Gemäß der Erfindung wird in vorteilhafter Weise ein Verfahren zur Optimierung des Ablaufs elektronisch gesteuerter Schaltvorgänge weitergebildet, bei dem sequentielle und/oder parallele Schritte über Transitionsbedingungen aktiviert werden. Hierbei wird erfindungsgemäß während des Ablaufs der elektronisch gesteuerten Schaltvorgänge die Aktivierungsdauer jedes Schrittes ermittelt und in Abhängigkeit von der Aktivierungsdauer wird das jeweilige Optimierungspotential bestimmt. Hierbei hat der am längsten aktive Schritt das größte Optimierungspotential, so dass die Weiterschaltbedingung für diesen Schritt als Erstes betrachtet werden muss.

Weiterhin ist es vorteilhaft, wenn zur Bestimmung des Optimierungspotentials die vor und nach jedem Schaltvorgang aktivierten Schritte und die zum Schaltvorgang gehörigen Weiterschalt- oder Transitionsbedingungen einschließlich aller Teilbedingungen angezeigt werden. Auf einfache Weise können dann z. B. in der Reihenfolge der jeweils am längsten aktivierten Schritte die jeweiligen Weiterschalt- oder Transitionsbedingungen angezeigt werden und diejenigen Teilbedingungen, die als letzte von mehreren für den jeweiligen Schaltvorgang notwendigen Teilbedingungen erfüllt wurden, werden ebenfalls aus der Zustandssteuerung ermittelt und angezeigt.

Zusätzlich ist es gemäß der Erfindung in vorteilhafter Weise möglich, dass bei einer Zustandssteuerung mit parallel ablaufenden Sequenzen durch eine Akkumulierung aller Schritte jeweils eines parallelen Zweiges eine Summenschrittdauer gebildet und der jeweils langsamste Parallelzweig zur Optimierung herangezogen wird. Diese Summenschrittdauer stellt ein absolutes Kriterium für die Optimierungsreihenfolge dar, da nur der langsamste Zweig bestimmend in den Gesamtablauf eingeht, wobei die Optimierung der schnelleren Parallelzweige sinnlos ist. Ist der langsamste Zweig identifiziert, erfolgen die Analyse und die Anzeige für eine Optimierung wie zuvor beschrieben.

Zur Durchführung des erfindungsgemäßen Verfahrens nach der zuvor beschriebenen Art ist in einem Automatisierungssystem ein Programmiergerät, ein Rechenwerk, eine Anzeigeeinheit und eine Speichereinheit vorhanden, mittels denen der Ablauf der elektronisch gesteuerten Schaltvorgänge auswertbar ist. Das erfindungsgemäße Verfahren mit der benötigten Anzeigeeinheit ist dabei unabhängig vom konkreten Anwendungsfall. Es nutzt im Wesentlichen die Tatsache aus, dass durch die Steuerung bereits eine Strukturierung des Prozessablaufs in einzelne Schritte erfolgt ist und die Bedingungen für die Übergänge zwischen den Schritten, d. h. das Weiterschalten, bereits formuliert sind.

Zusammenfassend ist festzustellen, dass die erfindungsgemäße automatisierte Auswertung und Anzeige der langsamsten Teilbedingung direkt aus der Zustandssteuerung des Automatisierungssystems heraus keine speziellen, auf den Anwendungsfall hin ausgelegte Messmittel benötigt. Es ist somit eine direkte Anzeige des Engpasses im Kontext der Ablaufsteuerung, bestehend aus Schritt und Teilbedingung, möglich und darüber hinaus auch eine Gewichtung der potentiellen Optimierungsmaßnahmen nach dem zu erwartenden Performancegewinn durchführbar, wobei eine Einbeziehung der Struktur der Ablaufsteuerung in die Ermittlung der Optimierungskandidaten auf einfache Weise möglich ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird anhand des in der Zeichnung dargestellten Ausführungsbeispiels erläutert. Es zeigen:
- Figur 1: eine Darstellung eines Ablaufplans für eine Steuerungsaufgabe und
- Figur 2: eine Detaildarstellung der Teilbedingungen einer der Weiterschalt- oder Transitionsbedingungen mit einer optimierbaren Teilbedingung.

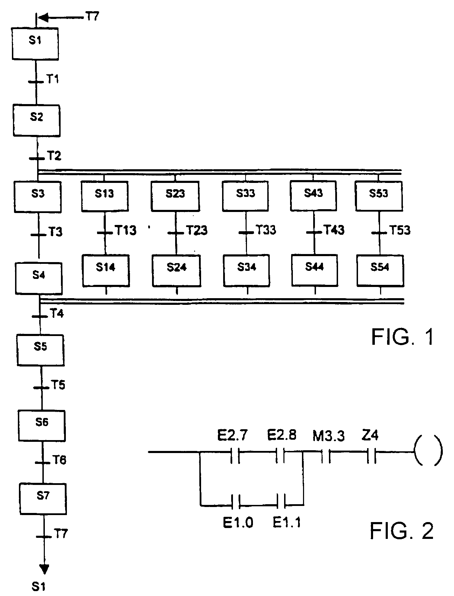

In Figur 1 ist die graphische Darstellung eines Netzes zur Beschreibung einer Ablaufsteuerung für einen industriellen Prozess gezeigt, beispielsweise eine vereinfachte Steuerung einer Abfüllanlage für Getränkedosen, so genannte Six Packs, deren Durchsatz optimiert werden soll.

Mit den Elementen der in der Figur 1 dargestellten Ablaufsteuerung werden lineare Schritte S1 und S2 für die Zuführung der Dosen beschrieben, daran schließt sich ein Parallelteil für die Abfüllung und Etikettierung jeweils einer Dose mit den Schritten S3, S4, S13, S14 bis S53, S54 an. Darauf folgt wiederum ein Linearteil für die Verpackung der Dosen mit den Schritten S5, S6 und S7. Die Schritte S1 bis S54 sind alle mit gerichteten Verbindungen über Transitions- oder Weiterschaltbedingungen T1 bis T53 miteinander verknüpft. Ein Schritt S1 bis S54 ist entweder aktiv oder deaktiv und gibt entsprechende in der Regel binäre oder digitale Daten als Ausgangsgrößen für den Steuerungsablauf ab.

Jeder Schritt S1 bis S54 kann dabei aus einzelnen Teilaktionen bestehen und zu jeder Transition gehört dann auch wieder eine Teilbedingung. Eine solche Verknüpfung von Teilbedingungen für die Transitionsbedingung T7 ist in Figur 2 dargestellt.

Eine erste Optimierungsanalyse könnte beim gezeigten Ausführungsbeispiel die textliche oder graphische Anzeige ergeben, dass der am längsten aktive Schritt der Schritt S7 mit einer Aktivierungsdauer von 4,8 Sekunden ist und die als letzte erfüllte Teilbedingung von T7 die Teilbedingung E1.1 nach der Figur 2 ist. E1.1 kann hier beispielsweise die Rückmeldung einer Waage in der oben erwähnten Abfüllanlage sein. Ein Optimierungsversuch ist nur an dieser automatisch ermittelten Stelle sinnvoll, da ja alle anderen Kriterien bereits vorher erfüllt waren. Jeglicher Optimierungsaufwand für Anlagenteile, die sich hinter E2.7, E2.8, M3.3, Z4 oder E1.0 verbergen, wäre daher sinnlos.

Im anhand der Figuren 1 und 2 beschriebenen Beispiel könnte somit eine Reduzierung der mechanischen Dämpfung des Waagen-Sensors z. B. eine Verkürzung der Schrittaktivierungsdauer auf 4,4 Sekunden bewirken.

Weiterhin kann mit dem erfindungsgemäßen Optimierungsverfahren ermittelt werden, dass die Teilkette S33, T33, S34 nach der Figur 1 von allen Parallelzweigen der Schritte S3 und S4 am längsten für die Bearbeitung benötigt. Das Ergebnis des Optimierungsverfahrens lautete dann, dass die langsamste Parallelsequenz S33 bis S34 eine Gesamtzeit von 2,2 Sekunden benötigt. Eine weitere folgende Analyse kann für die Transitionsbedingungen T33 und T4 in analoger Weise wie oben geschildert stattfinden. Als Ergebnis des sukzessive wiederholbaren Optimierungsverfahrens erhält man schließlich eine wesentlich gleichmäßiger ausgelastete Gesamtanlage, bei der keine individuellen Schwachpunkte mehr den Gesamtdurchsatz reduzieren.

## Patentansprüche

1. Verfahren zur Optimierung des Ablaufs elektronisch gesteuerter Schaltvorgänge, bei dem sequentielle und/oder parallele Schritte (S1 bis S54) durch vorgegebene Transitionsbedingungen (T1 bis T53) aktiviert werden, **dadurch gekennzeichnet, dass** während des Ablaufs der elektronisch gesteuerten Schaltvorgänge die Aktivierungsdauer jedes Schrittes (S1 bis S54) ermittelt wird und in Abhängigkeit von der Aktivierungsdauer das jeweilige Optimierungspotential bestimmt wird.

2. Verfahren nach Anspruch 1, **dadurch gekennzeichnet, dass** in der Reihenfolge der jeweils am längsten aktivierten Schritte (S1 bis S54) die jeweiligen Weiterschalt- oder Transitionsbedingungen (T1 bis T53) angezeigt werden und dass diejenigen Teilbedingungen, die als letzte von mehreren für den jeweiligen Schaltvorgang notwendigen Teilbedingungen erfüllt wurden, aus der Zustandssteuerung ermittelt und angezeigt werden.

3. Verfahren nach Anspruch 1 oder 2, **dadurch gekennzeichnet, dass** zur Bestimmung des Optimierungspotentials die vor und nach jedem Schaltvorgang aktivierten Schritte (S1 bis S54) mit den jeweiligen Weiterschalt- oder Transitionsbedingungen (T1 bis T53) einschließlich aller Teilbedingungen angezeigt werden.

4. Verfahren nach einem der vorhergehenden Ansprüche, **dadurch gekennzeichnet, dass** bei einer Zustandssteuerung mit parallel ablaufenden Sequenzen durch eine Akkumulierung aller Schritte jeweils eines parallelen Zweiges eine Summenschrittdauer gebildet und der jeweils langsamste Parallelzweig zur Optimierung herangezogen wird.

5. Automatisierungssystem zur Durchführung des Verfahrens nach einem der vorhergehenden Ansprüche, **dadurch gekennzeichnet, dass** ein Programmiergerät, ein Rechenwerk und eine Speichereinheit in dem Automatisierungssystem vorhanden sind, mittels denen der Ablauf der elektronisch gesteuerten Schaltvorgänge und damit die Aktivierungsdauer jedes Schrittes (S1 bis S54) ermittelbar und in Abhängigkeit von der Aktivierungsdauer das jeweilige Optimierungspotential bestimmbar ist.
